# EUROPÄISCHE PATENTANMELDUNG

(11) **EP 2 489 963 A2**
(43) Veröffentlichungstag der Anmeldung: **22.08.2012**
(21) Anmeldenummer: 12000748.9
(22) Anmeldetag: 04.02.2012
(51) Int. Cl.: F25B 17/08, F25B 27/00

(54) **Solar betriebener Sorptionsapparat**

(30) Priorität: 15.02.2011 DE 102011011308
(71) Anmelder: ZEO-TECH Zeolith Technologie GmbH, 85716 Unterschleissheim (DE)
(72) Erfinder: Maier-Laxhuber, Peter, Dr., 85276 Pfaffenhofen (DE); Schmidt, Ralf, Dr., 85354 Freising (DE); Becky, Andreas, 85635 Höhenkirchen-Siegertsbrunn (DE); Binnen, Manfred, 80933 München (DE); Richter, Gert, 02943 Boxberg / O.L. (DE); Weinzierl, Norbert, 85354 Freising (DE); Wörz, Reiner, Dipl.-Ing., 85293 Reichertshausen (DE); Berrang, Bianca, 85716 Unterschleissheim (DE)

(57) **Zusammenfassung**

Sorptionsapparat mit einem Sorptionsmittel (25), das unter Vakuum ein dampfförmiges Arbeitsmittel sorbieren kann, das von einer flüssigen Arbeitsmittelmenge abdampft und mit einem Kondensator (7) zur Rückverflüssigung des Arbeitsmittels, wobei das Sorptionsmittel (25) in mindestens einer Sorber-Röhre (3) angeordnet ist und die Sorber-Röhre (3) von einer evakuierten CPC-Röhre (2) umgeben ist, die bei Sonneneinstrahlung das Sorptionsmittel (25) aufheizt und wobei das flüssige Arbeitsmittel erstarren kann und die Sorber-Röhre (3) einen Wärmetauscher (1) enthält, der eine Wärmeträgerflüssigkeit (6) zur Kühlung des Sorptionsmittels (25) aufnehmen kann.

## Beschreibung

Die Erfindung betrifft solar angetriebene Sorptionsapparate bei welchen durch Verdampfung eines Arbeitsmittels und Sorption des Arbeitsmitteldampfes in einem Sorptionsmittel Kälte erzeugt wird. Die erzeugte Kälte kann in separierbaren Eis-Akkus gespeichert und mobil genutzt werden.

Kälte wird heute überwiegend nach dem Kaltdampfprozess mittels Kompressoren erzeugt. Sorptionsapparate benötigen hingegen zum Antrieb nur Wärme und keine mechanische Energie.

Zum optimalen Betrieb sind Antriebstemperaturen über 180°C notwendig. Ein rein solar-thermischer Antrieb eines Sorptionsapparates muss dieses Temperaturniveau bereitstellen. Kommerzielle CPC-Röhren (Compound Parabolic Concentrator) erreichen sowohl bezogen auf die reine Absorber-Fläche wie auch auf die Kollektor-Fläche den höchsten Wärmeertrag bei hohen Betriebstemperaturen im Vergleich zu sonstigen Kollektortypen.

Solar betriebene Sorptionskühlgeräte zum Kühlen mit festen Sorptionsmitteln sind beispielsweise aus der DE 3521448 bekannt. Ein Sorptionsmittelbehälter, gefüllt mit Sorptionsmittel, saugt dabei Arbeitsmitteldampf, welcher in zwei separaten Sammelbehältern entsteht, ab und sorbiert ihn unter Wärmefreisetzung. Die dabei frei werdende Sorptionswärme wird nachts aus dem Sorptionsmittel durch Wärmeabstrahlung abgeführt. Tagsüber wird das Sorptionsmittel wiederum durch Sonneneinstrahlung erhitzt. Der nachts adsorbierte Wasserdampf wird hierdurch desorbiert und abwechselnd in zwei separaten Kondensatoren verflüssigt und in den beiden Sammelbehältern zwischengespeichert. Die Sorptionskühlgeräte benötigen zwei Kondensatoren und zwei Sammelbehälter sowie einen zusätzlichen Kältekreislauf zur Entnahme der Kälte aus den Sammelbehältern. Der technische Aufwand hierfür ist erheblich.

Prinzipiell ist mittels Sorptionskühlgeräten, die mit Zeolith als Sorptionsmittel und Wasser als Arbeitsmittel vorgeschlagen wurden, die Erstarrung des Arbeitsmittel im Verdampfer möglich. Das Eis im Verdampfer kann dann während des folgenden Tages die Kühlung eines Kühlbehälters übernehmen. Für mobile Anwendungen wäre jedoch das gesamte Kühlsystem zu transportieren. Tagsüber müsste zudem darauf geachtet werden, dass das Kollektorsystem immer der Solarstrahlung ausgesetzt ist.

Aufgabe der Erfindung sind kostengünstige, solar betriebene Sorptionsapparate, die auch eine mobile Verwendung der solar erzeugten Kälte gestatten.

Gelöst wird diese Aufgabe durch die kennzeichnenden Merkmale des Anspruches 1. Die abhängigen Ansprüche zeigen weitere erfinderische Ausgestaltungen auf.

Der solar-thermische Antrieb des Sorptionsapparates erfolgt tagsüber durch Ausheizen (Desorptionsphase) des Sorptionsmittels mit Hilfe kommerzieller CPC-Röhren. Die aktive Eiserzeugung findet über Nacht in einem gut isolierten Behälter statt. Bei Verdampfungstemperaturen weit unter dem Gefrierpunkt von Wasser werden von außen an den Verdampfer angelegte Eis-Akku gefroren. Pro Quadratmeter CPC-Kollektorfläche können jeden Tag ca. 3 kg gefrorene Eis-Akkus entnommen werden.

Da Wasser, insbesondere mehrfach destilliertes (wenig Kristallisationskeime), erst nach signifikanter Unterkühlung gefriert, muss der Sorptionsapparat durch entsprechende Dimensionierung der Leitungsquerschnitte in der Lage sein, das Arbeitsmittel auch unterhalb -8°C (besser -12°C) zu verdampfen. Da Wasser unterhalb 0°C auch im Verdampfer gefroren vorliegt, erfolgt die Dampferzeugung über Sublimation direkt von der Eisoberfläche. Die außen am Verdampfer anliegenden Eis-Akkus gefrieren bei ausreichend tiefen Verdampfertemperaturen auf konventionelle Weise. Einmal gefrorene Eis-Akkus können in einem Lagerraum des Isolierbehälters bis zum jeweiligen Einsatz, z. B. Transport von Lebensmitteln oder Impfstoffen, gelagert werden. Durch den Einsatz eines speziellen Wärmespeichermaterials PCM (Phase Change Material) können die Lagerbedingungen der gefrorenen Eisakkus so optimiert werden, dass diese im Lagertemperaturbereich unter -5°C verbleiben und nicht antauen. Erfindungsgemäß kann innerhalb einer weiteren Abtrennung innerhalb des Isolierbehälters die Lagertemperatur auch auf positivem Temperaturniveau (z.B. zwischen +2°C und +8°C) geregelt werden. Zur Pufferung dieses Temperaturniveaus dienen z.B. gefrorene Speicherplatten mit Wasserfüllung. Zusätzlich können auch thermostatisch öffnende bzw. schließende Klappensysteme zum Einsatz kommen, um das Temperaturniveau bei stark variierenden Umgebungstemperaturen sowie der nur periodisch aktiven Kälteerzeugung zu nivellieren.

Der Sorptionsapparat kann als stationäres oder mobiles System ausgeführt werden. Er ist auch zur dezentralen Eiserzeugung in Regionen ohne oder nicht-stabiler Stromversorgung (z. B. Entwicklungsländern) hervorragend geeignet.

Im Sorptionsapparat kommen das umweltfreundliche Stoffpaar Zeolith (Sorptionsmittel) und Wasser (Arbeitsmittel) zum Einsatz. Die nächtliche Abkühlung des Sorptionsmittels erfolgt über einen Wärmetauscher der z.B. über einen Kühlwasserkreislaufs zunächst die fühlbare Wärme des Sorptionsmittels und anschließend auch die Sorptionswärme des resorbierten Arbeitsmitteldampfes abführt.

Das Sorptionsmittel Zeolith kann in seiner regelmäßigen Kristallstruktur bis zu 36 Massen-% Wasser reversibel sorbieren. Bei der erfindungsgemäßen Anwendung beträgt die technisch realisierbare Wasseraufnahme zwischen 15 und 20 Massen-%.

Während eines Verdampfungsprozesses steht das Sorptionsmittel beispielsweise mit Wasserdampf bei einem Druck von nur 2 mbar (Verdampfertemperatur ca. -12 °C) in Kontakt. Zeolithe sorbieren unter Wärmefreisetzung Wasserdampf bis zum thermodynamischen Gleichgewicht. Die maximale Wasserbeladung ist dann erreicht, wenn die Zeolithtemperatur unter dem herrschenden Dampfdruck die minimale Temperatur erreicht hat. Bei nächtlichen Umgebungstemperaturen von ca. 30 °C, wie sie häufig in tropischen Regionen auftreten, wird die tiefste Sorptionsmittel-Temperatur ca. 40 °C erreichen. Kommerzielle, synthetische Zeolithe enthalten unter dieser Gleichgewichtsbedingung ca. 19 Massen-% Wasser. Wenn während der vorausgehenden Desorptionsphase die Sorptionsmittel-Temperaturen auf über 250°C angestiegen waren, konnte das Sorptionsmittel, eine Kondensationstemperatur von ca. 50 °C angenommen, auf eine Restwasserbeladung von 4 Massen-% getrocknet werden. Im Tageszyklus können dann pro Kilogramm Zeolith 15 Massen-% Wasser, also 150 g Wasser im Verdampfer verdampfen und Kälte bei -12°C bereitstellen. Bei dieser niedrigen Verdampfertemperatur können somit rechnerisch je Kilogramm Zeolith bis zu 1 kg Eis in den Eis-Akkus gefroren werden. -

Zeolith ist ein kristallines Mineral, das aus einer regelmäßigen Gerüststruktur aus Silizium- und Aluminiumoxiden besteht. Diese Gerüststruktur enthält Hohlräume, in welchen Wassermoleküle unter Wärmefreisetzung sorbiert werden können. Innerhalb der Gerüststruktur sind die Wassermoleküle starken Feldkräften ausgesetzt, deren Stärke (und damit die Adsorptionswärme) von der bereits in der Gerüststruktur enthaltenen Wassermenge und der Temperatur des Zeolithen abhängt. Von den synthetischen Zeolithtypen kommen vor allem die Typen A, X und Y, jeweils in ihrer preisgünstigen Na-Form zum Einsatz.

Bei allen Zeolithtypen besteht die Gefahr, dass sie je nach Syntheseverfahren und Ausgangsmaterialien Beimengungen enthalten, die im Vakuum und insbesondere bei höheren Temperaturen gasförmige Bestandteile abgeben, die den Kühlprozess beeinflussen. Gelöst wird das Problem der Gasfreisetzung dadurch, dass Zeolithe bei der Fertigung des Kühlelementes mindestens auf die spätere Sorptionsmittel-Temperatur aufgeheizt und zugleich unter das dann herrschende Vakuum gesetzt werden. Bei dieser Prozedur können Zeolithe erfindungsgemäß ihre störenden Bestandteile abgeben. Besonders effizient ist diese thermische Behandlung, wenn dabei zugleich das vorsorbierte Wasser abgedampft werden kann.

Alternativ kann der Sorptionsapparat auch mit einem Sammelsystem für inerte Gase ausgerüstet sein. Derartige Sammelsysteme sind aus der EP 9015640 und der EP10001445 bekannt. Sie werden in diesem Anwendungsfall an den Sammelbehälter angedockt und sammeln die Sorption behindernde Inertgase.

Neben der Kombination Zeolith/Wasser sind auch andere feste Sorptionsstoff-Paarungen für den Einsatz in erfindungsgemäßen Sorptionsapparaten möglich. Besonders erwähnt seien Bentonite und Salze, die ebenfalls mit dem Arbeitsmittel Wasser geeignete Kombinationen darstellen. Auch Aktivkohle kann in Kombination mit Alkoholen eine vorteilhafte Lösung bieten.

Erfindungsgemäß ist die Sorptionsmittelmenge so anzuordnen, dass für den einströmenden Wasserdampf nur ein minimaler Druckabfall innerhalb des Sorptionsmittels überwunden werden muss. Bei der erfindungsgemäßen Anwendung sollte der Druckabfall, insbesondere bei Wasser als Arbeitsmittel, weniger als 1 mbar betragen. Zudem muss das Sorptionsmittel dem zuströmenden Arbeitsmitteldampf ausreichend Oberfläche zur Anlagerung bieten. Um eine gleichmäßige Sorption innerhalb des Sorptionsmittels und einen geringen Druckabfall zu gewährleisten, haben sich besonders Sorptionsmittel-Granulate bewährt. Granulatdurchmesser zwischen 2 und 4 mm zeigen dabei die besten Resultate. Innerhalb der röhrenförmigen Sorbergeometrie muss somit ein axialer Dampfströmungskanal für den ein- und ausströmenden Wasserdampf vorgesehen sein.

Da Zeolith-Granulate eine geringe Wärmeleitung haben, ist die Sorber-Röhre so auszulegen, dass der durchschnittliche Wärmeleitweg innerhalb des Sorptionsmittels 5 cm nicht übersteigt. Der innere Durchmesser der CPC-Röhre sollte demzufolge nicht größer als 120 mm betragen, wobei für den Dampfströmungskanal in der Mitte der Röhre ein Durchmesser von ca. 20 mm kalkuliert wurde.

Das Arbeitsmittel wird im Verdampfer durch hygroskopische Effekte eines Vliesmaterials homogen auf der Innenfläche des Verdampfers verteilt und fixiert. Besonders saugfähige Vliese bestehen aus Polypropylen-oder Mikroglasfasern. Diese saugen ein mehrfaches ihres Eigengewichts an Wasser auf und erlauben auch eine unbehinderte Sublimation des Wasserdampfes vom bereits vereisten Arbeitsmittel. Zu beachten ist, dass das flüssige Arbeitsmittel bei der Rückströmung aus dem Sammelbehälter in den Verdampfer auf noch gefrorenes Arbeitsmittel strömt. Es sind deshalb konstruktive Vorkehrungen zu treffen, damit das flüssige Arbeitsmittel in alle Bereiche des Verdampfers verteilt wird, bevor es selbst erstarrt.

Für den Kondensator können einfache, luftgekühlte Wärmetauscher eingesetzt werden. Sie müssen tagsüber die anfallende Kondensationswärme an die Luft abführen. Eine Platzierung im Schatten der CPC-Spiegel ist vorteilhaft.

Auch an das Ventil werden keine besonderen Anforderungen gestellt. Da der Sorptionsapparat unter Vakuumbedingungen arbeitet, ist allerdings eine vakuumdichte Betätigung notwendig. Hierfür gibt es zahlreiche technische Lösungen. Die Ventil-Betätigung erfolgt nur zweimal am Tag. Das Ventil wird bei Sonnenaufgang geschlossen und nach Sonnenuntergang geöffnet, um das im Sammelbehälter aufgestaute Kondensat in den Verdampfer abströmen zu lassen. Während der gesamten Nacht bleibt das Ventil offen, um den Wasserdampf in den Sorber abströmen zu lassen.

Erfindungsgemäß kann aber auch das Ventil und dessen Ansteuerung elegant durch ein heat-pipe System ersetzt werden. Das Arbeitsmittel wird hierbei tagsüber wie bisher im nunmehr sehr gut isolierten Sammelbehälter gesammelt. Zum Verdampfen läuft es jedoch nicht in den Verdampfer ab, sondern verbleibt im Sammelbehälter und verflüssigt dort den außen anstehenden Kältemitteldampf, der seinerseits in einem Kältemittelverdampfer verdampft und dort den Isolierbehälter kühlt und eingelegte Eis-Akkus gefriert. Dank des heat-pipe Systems wird die Wärme aus dem Isolierbehälter ausgetragen. Die hohen Kondensationstemperaturen während des Tages werden jedoch nicht in den Isolierbehälter eingekoppelt.

Besonders vorteilhaft kann diese Ausführungsform zum Einsatz kommen, wenn die Sorber-Röhren weiter entfernt auf einem Gebäude-Dach angeordnet sind und das Isoliergehäuse z.B. im Gebäude-Keller aufgestellt ist. Das heat-pipe System verbindet beide Systemkomponenten flexibel miteinander. Zum Transport und zur Montage muss der unter Vakuum stehende Sorptionsapparat nicht geöffnet werden.

Selbstverständlich kann die im Sammelbehälter erzeugte Kältemenge auch über klassische Kältekreisläufe, mit oder auch ohne Förderpumpe, in den Isolierbehälter übertragen werden.

Da die vorgeschlagenen Vakuum-Röhren eine sehr gute thermische Isolierung aufweisen, ist eine aktive Kühlvorrichtung für das heiße Sorptionsmittel vorzusehen. Allein die natürlichen Wärmeverluste während der Nacht reichen nicht aus, das Sorptionsmittel ausreichend zu kühlen. Als effektive Kühlung enthält demzufolge jede Sorber-Röhre einen Wärmetauscher, der mit Wärmeträgerflüssigkeit geflutet werden kann. Wegen der sehr hohen Tagestemperaturen innerhalb der Sorber-Röhren ist es sinnvoll, die Wärmeträgerflüssigkeit tagsüber auslaufen zu lassen oder die Füllmenge so gering zu halten, dass die Wärmeträgerflüssigkeit am frühen Vormittag bereits aus dem Wärmetauscher abgedampft ist und dafür nicht zu viel Sonnenwärme verbraucht wird.

Für einige Anwendungsfälle kann es günstig sein, die tagsüber im Sorptionsmittel gesammelte Sonnenwärme nachts in außenliegenden Wärmerückgewinnungssystemen zu speichern und z.B. für die Bereitstellung von Warmwasser zu nutzen.

Vorzugsweise sind zwei Wärmerückgewinnungsarten im Einsatz. Zum einen kann auch hier der heat-pipe Effekt genutzt werden. Ein über die Sonneneinstrahlung gesteuertes Thermostatventil öffnet den Wärmeträgerkreislauf und lässt Wärmeträgerflüssigkeit aus einem höher gelegenen Wärmeträgerpuffer in die Wärmetauscher laufen. Innerhalb der Wärmetauscher verdampft ein Teil der einlaufenden Wärmeträgerflüssigkeit und trägt die Wärme dampfförmig in den Wärmeträgerpuffer. Dieser kann über geeignete Wärmetauscherflächen die Sorptionswärme an die Umgebung abgeben oder aber in einem Wassertank speichern.

Die zweite bevorzugte Ausführungsform nutzt eine Förderpumpe, mittels derer die Wärmeträgerflüssigkeit durch die Wärmetauscher gepumpt wird. Tagsüber, bei Stillstand der Förderpumpe, kann die Wärmeträgerflüssigkeit aus dem Wärmetauscher zurück in den tiefer liegenden Wärmeträgerpuffer auslaufen. Die Wärmeträgerflüssigkeit kann in diesem Fall auch Wasser sein. Während für die erste Lösung ein leichterflüchtiges Medium, z.B. Methanol oder Aceton, besser geeignet ist.

Die Zeichnung zeigt in:
Fig. 1 einen kompletten Sorptionsapparat in geschnittener Darstellung während der nächtlichen Kühlphase
Fig. 2 denselben Sorptionsapparat tagsüber bei Solarstrahlung
Fig. 3 einen Sorptionsapparat mit einem heat-pipe System an Stelle des Ventils und einem alternativen Wärmeträgerkreislauf
Fig. 4 eine Sorber-Röhre und eine CPC-Röhre, jeweils geschnitten

In allen vier Figuren sind gleiche Bauteile mit gleicher Nummerierung versehen.

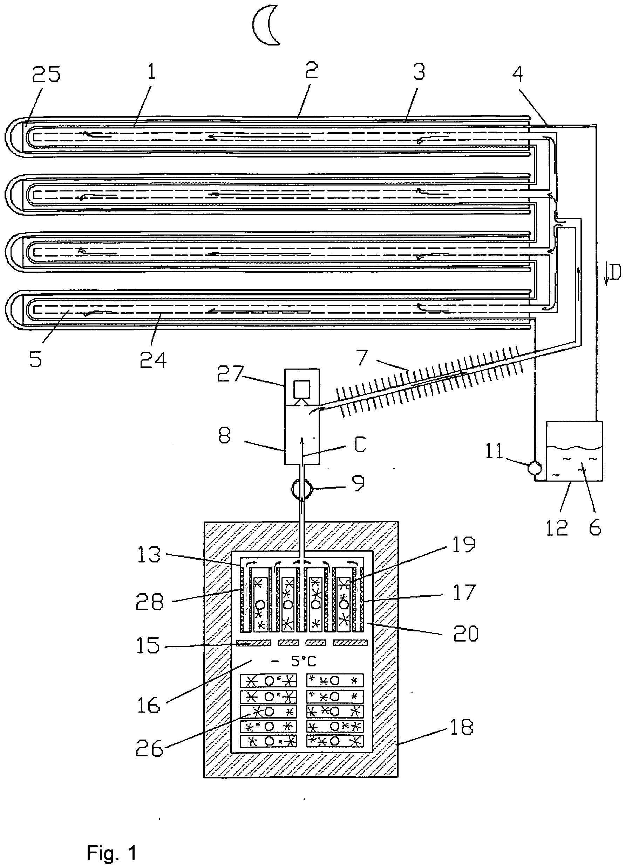

In Fig. 1 ist ein Kollektorfeld mit vier waagrecht verlaufenden CPC-Röhren 2 während der Sorptionsphase dargestellt. Die CPC-Röhren 2 sind auf vier Sorber-Röhren 3 aufgeschoben, die das Sorptionsmittel Zeolith 25 im Vakuum enthalten. Die Sorber-Röhren 3 sind mit einem berippten Kondensator 7 verbunden, der an seinem tiefen Ende in einen Sammelbehälter 8 mündet. An seinem unteren Auslauf ist ein Ventil 9 angeschlossen, das den Dampfweg vom Verdampfer 13 steuert. Während der Sorptionsphase ist das Ventil 9 offen. Eine Wasserdampfströmung C wird durch die Saugwirkung des Sorptionsmittels 25 vom Verdampfer 13 durch das Ventil 9, den Sammelbehälter 8 und den Kondensator 7 bis in die Sorber-Röhren 3 aufrecht erhalten. In fünf Verdampfer-Taschen 17 des Verdampfers 13 verdampft zunächst Wasser bis es vereist. Nach dem Vereisen sinkt die Verdampfungstemperatur weiter ab. Bei ausreichend großen Dampfströmungsquerschnitten können sehr tiefe Verdampfungstemperaturen erreicht werden. Vier handelsübliche EisAkkus 19 mit je 600 g Wasserinhalt befinden sich im thermischen Eingriff der Verdampfer-Taschen 17. Die Eis-Akkus 19 werden bis zum nächsten Morgen durcheisen. Die Verdampfer-Taschen 17 sind auf den Innenflächen mit hygroskopisch wirkendem Material 28 aus Glasfaservlies beschichtet, welches das zunächst flüssig einlaufende Arbeitsmittel homogen verteilt und später das gefrorene Arbeitsmittel in gutem thermischen Kontakt zu den Außenflächen hält. Der Verdampfer 13 ist im oberen Kühlbereich 20 eines Isolierbehälters 18 angeordnet. Das darunter angeordnete Lagervolumen 16 ist über eine Lage PCM 15 abgedeckt, dessen Schmelztemperatur auf ca. -10°C eingestellt ist. Dank der sehr tiefen Verdampfungstemperaturen wird nachts auch das PCM 15 durchgefroren. Im Lagervolumen 16 sind zehn vereiste Eis-Akkus 26 gestapelt. Dank des PCM 15 bleibt deren Temperatur im Lagervolumen 16 auch tagsüber unterhalb -5°C. Die ungenutzten Eis-Akkus 26 schmelzen somit während der Lagerzeit nicht.

Die Rückkühlung des Sorptionsmittels 25 erfolgt über einen Wärmeträgerkreislauf 4, der mittels einer kleinen Förderpumpe 11 Wasser 6 aus einem Wärmeträgerpuffer 12 in Strömungsrichtung D durch den Wärmetauscher 1 innerhalb der Sorber-Röhren 3 pumpt.

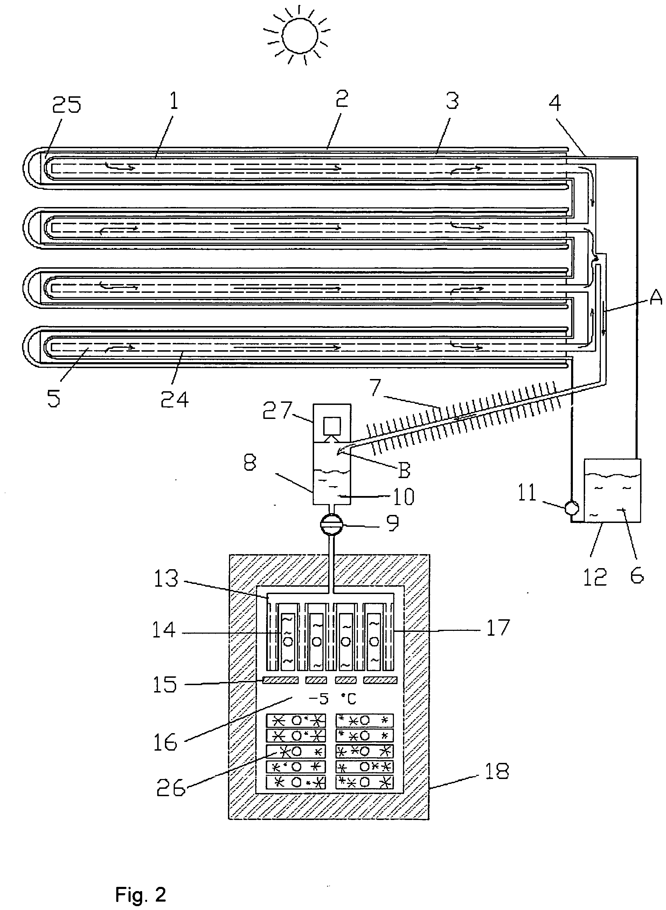

In Fig. 2 ist der Sorptionsapparat aus Fig. 1 in der tagsüber ablaufenden Desorptionsphase dargestellt. Der Wärmeträgerkreislauf 4 ist außer Betrieb und das Ventil 9 ist geschlossen. Das nachts in dem Wärmetauscher 1 zirkulierende Wasser 6 ist in den Wärmeträgerpuffer 12 abgelaufen. Durch Sonneneinstrahlung auf die CPC-Röhren 2 wird das Sorptionsmittel 25 tagsüber auf weit über 180°C erhitzt. Dabei strömt desorbierter Wasserdampf aus den Sorber-Röhren 3 in den Kondensator 7, der zur besseren Wärmeabgabe an die Umgebung berippt ist. Das verflüssigte Arbeitsmittel 10 wird im Sammelbehälter 8 bei geschlossenem Ventil 9 aufgestaut.

In dieser Prozessphase ist auch das Sammelsystem 27 für inerte Gase in Funktion. Ein Schwimmkörper mit Dichtsitz lässt etwas Wasserdampf aus dem Sammelbehälter 8 in das Sammelsystem 27 einströmen. Die Wasserdampfströmung B fördert Inertgase aus allen angeschlossenen Bereichen des Sorptionsapparates in den Sammelbehälter 8. Ein kleiner Teilstrom reicht aus, das Inertgas von dort in das Hohlvolumen des Sammelsystems 27 mitzureißen. Der einströmende Wasserdampf verflüssigt sich während die Inertgase über dem Flüssigkeitsniveau gasförmig bleiben. Am Ende der Desorptionsphase lässt der Schwimmkörper dann das flüssige Arbeitsmittel solange wieder in den Sammelbehälter 8 ablaufen, bis der absinkende Schwimmkörper den Dichtsitz wieder verschließt. Das Inertgas bleibt im Sammelsystem 27 gefangen, während das Arbeitsmittel flüssig ablaufen kann.

Das PCM 15 hält tagsüber den Isolierbehälter 18 auf tiefem Temperaturniveau. Das Speichermaterial schmilzt bei ca. -10°C und hält damit das Lagervolumen 16 auf einer Temperatur unterhalb des Schmelzpunktes der eingelagerten Eis-Akkus 26. Die während der vorausgegangen Nacht zwischen den Verdampfer-Taschen 17 gefrorenen Eis-Akkus 19 sind inzwischen durch neue, nicht vereiste Eis-Akkus 14 ausgetauscht worden.

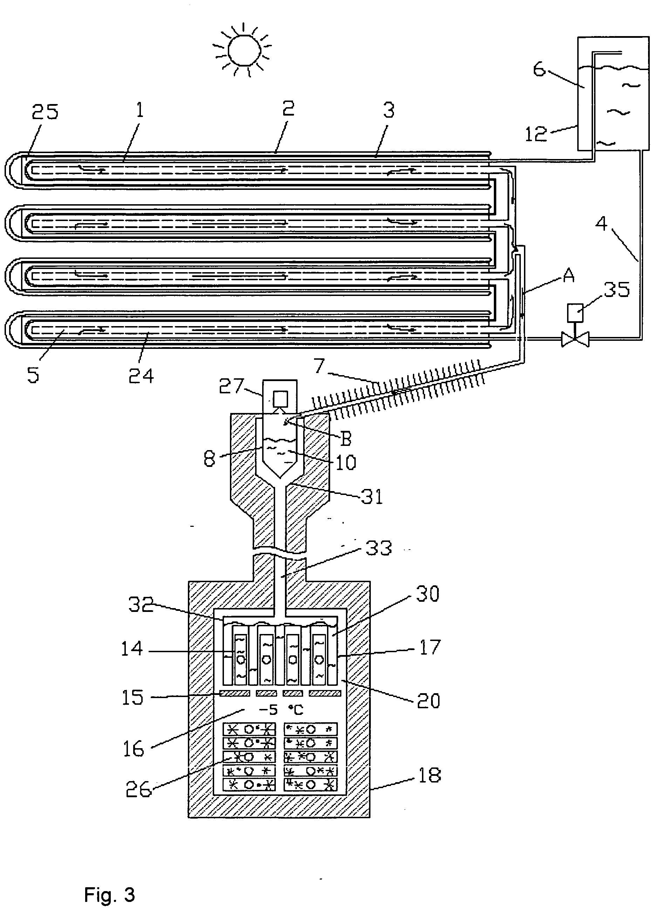

Fig. 3 zeigt eine weitere Variante eines Sorptionsapparates, bei dem das Ventil 9 durch ein heat-pipe System ersetzt ist. Dargestellt ist wiederum die tagsüber bei Sonnenschein ablaufende Desorptionsphase. Im Sammelbehälter 8 staut sich das flüssige Arbeitsmittel 10. Die hohen Kondensationstemperaturen werden nicht in den Isolierbehälter 18 übertragen, da der im Bereich des Sammelbehälters 8 anstehende Kältemitteldampf nicht zirkuliert und keine Wärme in den Isolierbehälter 18 eintragen kann. Das im Kältemittelverdampfer 32 eingefüllte Kältemittel 30 ist tagsüber inaktiv. Es verdampft erst, wenn die Temperatur im Sammelbehälter 8 unter seine Verdampfungstemperatur im Isolierbehälter 18 sinkt. Kältemitteldampf strömt dann über die Verbindungsleitung 33 zum Verflüssiger 31. Der Kältemitteldampf verflüssigt sich dann an den Außenwänden des Sammelbehälters 8. Verflüssigtes Kältemittel tropft vom Sammelbehälter 8 ab und fließt zurück in den Kältemittelverdampfer 32, um dort erneut zu verdampfen. Bei genügend tiefen Verdampfungstemperaturen des Arbeitsmittels 10 im Sammelbehälters 8 können die Eis-Akkus 14 im Eingriff des Kältemittelverdampfers 32 vereisen und auch das PCM 15 kann erstarren.

In Fig. 3 ist auch eine zweite Variante des Wärmeträgerkreislaufs dargestellt. Ein durch solare Einstrahlung gesteuertes Thermostatventil 35 schließt morgens den Wärmeträgerkreislauf 4 sobald die Solarstrahlung auf die Sorber-Röhren 2 trifft. Die noch in den Wärmetauschern 1 befindliche Wärmeträgerflüssigkeit 6 verdampft durch die solare Einstrahlung und sammelt sich im Wärmeträgerpuffer 12. Tagsüber sind die Wärmetauscher 1 leer. Erst abends öffnet das Thermostatventil 35 und lässt während der ganzen Nacht Wärmeträgerflüssigkeit 6 zur Rückkühlung des Sorptionsmittels 25 in die Wärmetauscher 1 nachströmen.

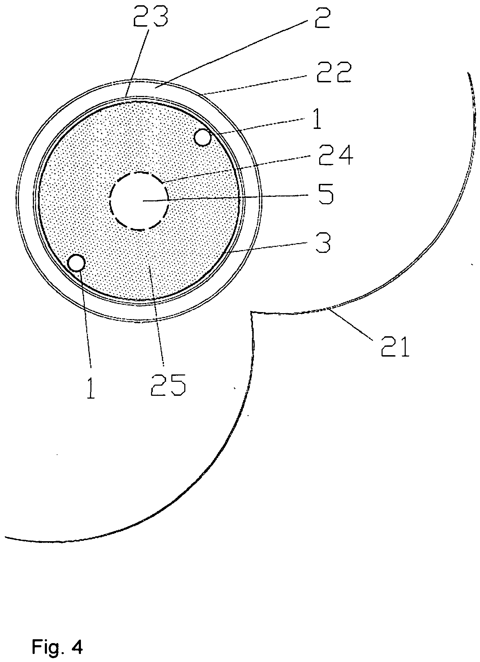

Fig. 4 zeigt schließlich einen Querschnitt durch eine Sorber-Röhre 3, die von einer CPC-Röhre 2 umgeben ist. Ein gelocht ausgeführtes Rohr 24 bildet den Dampfströmungskanal 5, der axial in der Mitte der Sorber-Röhre 3 verläuft. Sorptionsmittel 25 füllt den Zwischenraum zwischen Rohr 5 und dem Außenmantel der Sorber-Röhre 3 auf. Zwei Kupferrohre fungieren als Wärmetauscher 1 zur Rückkühlung des Sorptionsmittels 25. Sie verlaufen in axialer Richtung innerhalb der Sorptionsmittel-Schüttung. Auf die Sorber-Röhre 3 ist die evakuierte CPC-Röhre 2 lediglich aufgeschoben. Diese kann zum Transport bzw. im Falle einer Beschädigung leicht entfernt werden. Die in der CPC-Röhre 2 generierte Wärme muss jedoch durch einen schmalen Luftspalt auf die Sorber-Röhre 3 übergehen. Die CPC-Röhre 2 besteht aus zwei konzentrischen Glasröhren 22, 23, die zu einer langen, einseitig offenen, thermoskannenartigen Röhre verarbeitet sind. Auf der nach außen zeigenden Oberfläche der inneren Glasröhre 23 und somit im geschützten Vakuumbereich ist eine selektive Absorptionsschicht aufgetragen, die das einfallende Sonnenlicht in Wärme umwandelt. Ein hinter der CPC-Röhre 2 aufgestellter Parabolspiegel 21 reflektiert die nicht direkt auf die Röhre 2 auftreffenden Sonnenstrahlen auf die selektive Schicht.

In den Figuren 1 bis 3 sind diese Parabolspiegel 21 nicht gezeichnet. Sie sind jedoch ein wesentlicher Bestandteil des Sorptionsapparates.

## Patentansprüche

1. Sorptionsapparat mit einem Sorptionsmittel (25), das unter Vakuum ein dampfförmiges Arbeitsmittel sorbieren kann, das von einer flüssigen Arbeitsmittelmenge abdampft und mit einem Kondensator (7) zur Rückverflüssigung des Arbeitsmittels
**dadurch gekennzeichnet, dass**
das Sorptionsmittel (25) in mindestens einer Sorber-Röhre (3) angeordnet ist und die Sorber-Röhre (3) von einer evakuierten CPC-Röhre (2) umgeben ist, die bei Sonneneinstrahlung das Sorptionsmittel (25) aufheizt und dass
das flüssige Arbeitsmittel erstarren kann und dass
die Sorber-Röhre (3) einen Wärmetauscher (1) enthält, der eine Wärmeträgerflüssigkeit (6) zur Kühlung des Sorptionsmittels (25) aufnehmen kann.

2. Sorptionsapparat nach Anspruch 1,
**dadurch gekennzeichnet, dass**
der lichte Innendurchmesser der CPC-Röhre (2) zur Aufnahme der Sorber-Röhre (3) zwischen 40 und 120 mm groß ist.

3. Sorptionsapparat nach einem der vorangehenden Ansprüche, **dadurch gekennzeichnet, dass**
ein Verdampfer (13) an seinen Innenflächen ein saugfähiges Material (28) zur großflächigen Verteilung des flüssigen Arbeitsmittels enthält.

4. Sorptionsapparat nach Anspruch 3,
**dadurch gekennzeichnet, dass**
der Wärmetauscher (1) Teil eines Wärmerückgewinnungssystems (1, 4, 11, 12, 35) ist, mit welchem die tagsüber im Sorptionsmittel (25) gespeicherte Wärme nachts entnommen und genutzt werden kann.

5. Sorptionsapparat nach einem der vorangehenden Ansprüche, **dadurch gekennzeichnet, dass**
der Verdampfer (13) flächige Verdampfer-Taschen (17) aufweist, an denen von außen anliegende, konventionelle Eis-Akkus (14, 19) gefroren werden können und dass die Verdampfungstemperatur unter - 8 °C liegt.

6. Sorptionsapparat nach einem der vorangehenden Ansprüche,
**dadurch gekennzeichnet, dass**
dem Sorptionsmittel (25) synthetischer und/oder natürlicher Zeolith beigemischt ist und dass das Arbeitsmittel Wasser enthält.

7. Sorptionsapparat nach einem der vorangehenden Ansprüche, **dadurch gekennzeichnet, dass**
der Verdampfer (13) bzw. ein Kältemittelverdampfer (32) von einem Isolierbehälter (18) umgeben ist, der zusätzlich ein Lagervolumen (16) zur Lagerung bereits vereister Eis-Akkus (26) bei Temperaturen unterhalb von 0°C aufweist.

8. Sorptionsapparat nach Anspruch 7,
**dadurch gekennzeichnet, dass**
das Lagervolumen (16) ein PCM (15) (Phace Change Material) enthält, das die Lagertemperatur für längere Zeit unterhalb -5°C halten kann.

9. Sorptionsapparat nach Anspruch 7,
**dadurch gekennzeichnet, dass**
das Isoliergehäuse (18) einen weiteren Lagerbereich aufweist, dessen Temperatur zwischen +2°C und +8°C regelbar ist.

10. Sorptionsapparat nach einem der vorangehenden Ansprüche, **dadurch gekennzeichnet, dass**
an den Sammelbehälter (8) ein Sammelsystem (27) für inerte Gase angeschlossen ist.

11. Sorptionsapparat nach einem der vorangehenden Ansprüche, **dadurch gekennzeichnet, dass**
an den Sammelbehälter (8) ein heat-pipe System angekoppelt ist, das durch Verdampfen eines Kältemittels (30) in einem Kältemittelverdampfer (32) Wärme aus dem Isolierbehälter (18) durch Verdampfung aufnimmt und an den Sammelbehälter (8) in einem Verflüssiger (31) durch Rückverflüssigen überträgt und dass
der Sammelbehälter (8) während der Nacht als Verdampfer für das Arbeitsmittel (10) fungiert.

12. Sorptionsapparat nach Anspruch 11,
**dadurch gekennzeichnet, dass**
das heat-pipe System zwischen dem Verflüssiger (31) und dem Kältemittelverdampfer (32) über eine thermisch isolierte Verbindungsleitung (33) verfügt, in der flüssiges Kältemittel vom Sammelbehälter (8) zurück in den Kältemittelverdampfer (32) und Kältemitteldampf vom Kältemittelverdampfer (32) zum Verflüssiger (31) strömen können.
